# EUROPÄISCHE PATENTSCHRIFT

(11) **EP 4 018 535 B1**
(45) Veröffentlichungstag und Bekanntmachung des Hinweises auf die Patenterteilung: **05.11.2025**
(21) Anmeldenummer: 20760427.3
(22) Anmeldetag: 19.08.2020
(51) Int. Cl.: H02K 5/173, H02K 7/00, H02K 7/08, H02K 15/02, H02K 15/14, H02K 15/028

(54) **VERFAHREN ZUR ANORDNUNG EINER ELEKTRISCHEN MASCHINE AUF EINEM GETRIEBE UND ANTRIEBSEINTRICHTUNG**
METHOD FOR ARRANGING AN ELECTRIC MACHINE ON A TRANSMISSION, AND DRIVE DEVICE
PROCÉDÉ POUR AGENCER UNE MACHINE ÉLECTRIQUE SUR UNE TRANSMISSION ET DISPOSITIF D'ENTRAÎNEMENT

(30) Priorität: 21.08.2019 DE 102019212534
(43) Veröffentlichungstag der Anmeldung: 29.06.2022
(73) Patentinhaber: Schaeffler Technologies AG & Co. KG, 91074 Herzogenaurach (DE)
(72) Erfinder: FUKUMOTO, Isao, 81737 München (DE); RADWAINSKI, Matti, 81737 München (DE)
(74) Vertreter: Vitesco Technologies
(86) Internationale Anmeldenummer: PCT/EP2020/073148
(87) Internationale Veröffentlichungsnummer: WO 2021/032762

(56) Entgegenhaltungen:
- EP-A1- 3 517 460
- DE-A1- 102012 100 190
- DE-A1- 102017 218 350
- FR-A- 965 860

## Beschreibung

Die Erfindung betrifft ein Verfahren zur Anordnung einer elektrischen Maschine auf einem Getriebe, wobei die elektrische Maschine derart auf dem Getriebe angeordnet wird, so dass ein reduzierter Luftspalt zwischen einem Rotor und einem Stator der elektrischen Maschine erzielt werden kann. Auf diese Weise kann die Leistungsdichte der elektrischen Maschine erhöht werden. Die Erfindung betrifft zudem eine Antriebseinrichtung mit einem Getriebe und einer elektrischen Maschine, wobei die elektrische Maschine mittels des erfindungsgemäßen Verfahrens auf dem Getriebe angeordnet ist.

Elektrische Maschinen für zumindest teilweise elektrisch angetriebene Kraftfahrzeuge sind grundsätzlich bekannt. Derartige elektrische Maschinen unterliegen aufgrund der hohen Drehzahlen von mehr als 12.000 U/min großen Belastungen. Zudem sollten derartige elektrische Maschinen leise sein, damit Dritte oder auch der Fahrer von den Geräuschen des Elektromotors nicht in unnötiger Weise belästigt werden. Des Weiteren ist es ein Bestreben, die elektrische Maschine möglichst leicht zu bauen, damit die Gesamtperformance des Kraftfahrzeugs erhöht werden kann. Das Bestreben der Gewichtseinsparung an der elektrischen Maschine kann dazu führen, dass Bauteile der elektrischen Maschine, insbesondere die Rotorwelle, filigraner ausgebildet werden und somit eine erhöhte Elastizität aufweisen können.

Zusätzlich ist das Bestreben, größtmögliche Leistungsdichten zu erreichen, was dazu führt, den Luftspalt zwischen dem Rotor und dem Stator der elektrischen Maschine zu minimieren. Dies kann jedoch problematisch sein, wenn der Rotor aufgrund von Gewichtseinsparungen eine erhöhte Elastizität aufweist. Ein Ziel ist daher, die Anordnung der elektrischen Maschine auf dem Getriebe derart zu optimieren, dass Toleranzen zwischen einer Getriebeeingangswelle und der Rotorwelle des Rotors reduziert und/oder ausgeglichen werden, um den Luftspalt zwischen Stator und Rotor zu minimieren.

Die DE 10 2017 218 350 A1 beschreibt ein Getriebe mit einer integrierten elektrischen Maschine. An das Getriebegehäuse ist ein Vorsprung ausgebildet, in dem eine elektrische Maschine angeordnet ist. Der Vorsprung ist endseitig über eine Adaptereinrichtung verschlossen. Die Adaptereinrichtung weist eine Achse auf. Die Achse greift in eine Rotorhohlwelle ein. Über zwei Lager ist der Rotor auf der Achse drehbar gelagert.

Die EP 3 517 460 A1 beschreibt die Anordnung eines Motors an ein Gehäuse einer Flachteil-Zuführeinrichtung.

FR 965 860 A zeigt die Lagerung eines Außenläufers und einen Innenläufers, wobei der Innenläuft über zwei Lagereinrichtungen auf einem Dorn gelagert ist.

In der DE 10 2012 100 190 A1 ist ein Verfahren zur Herstellung eines Rotors für einen Elektromotor beschrieben.

Es ist die Aufgabe der Erfindung ein Verfahren zur Anordnung einer elektrischen Maschine auf einem Getriebe bereitzustellen, dass einen reduzierten Luftspalt zwischen dem Rotor und dem Stator der elektrischen Maschine ermöglicht.

Diese Aufgabe wird durch den Gegenstand des Patentanspruchs 1 gelöst. Bevorzugte Weiterbildungen der Erfindung sind in den Unteransprüchen sowie der nachfolgenden Beschreibung und den Zeichnungen angegeben, wobei jedes Merkmal sowohl einzeln als auch in Kombination einen Aspekt der Erfindung darstellen kann.

Erfindungsgemäß ist ein Verfahren zur Anordnung einer elektrischen Maschine auf einem Getriebe vorgesehen, umfassend die Schritte:
- Bereitstellen eines Statorgehäuses, das zumindest eine zylinderförmig ausgebildete innere Mantelfläche und eine Aufnahmeöffnung aufweist;
- Einsetzen eines hohlzylinderförmig ausgebildeten Stators in das Statorgehäuse, so dass der Stator drehfest in dem Statorgehäuse angeordnet ist;
- Einführen eines Zentrierdorns über die Aufnahmeöffnung des Statorgehäuses in einen Statorhohlraum des hohlzylinderförmig ausgebildeten Stators und Verspannen des Zentrierdorns in dem Statorhohlraum;
- Ausrichten des Statorgehäuses auf dem Getriebe, so dass eine Längsachse einer in dem Getriebe gelagerten Getriebeeingangswelle koaxial zur Längsrichtung des in dem Stator angeordneten Zentrierdorns ausgerichtet ist;
- Befestigen des Statorgehäuses auf dem Getriebe;
- Entnahme des Zentrierdorns aus dem Statorhohlraum;
- Einsetzen eines eine Rotorhohlwelle aufweisenden Rotors in den Stator;
- Befestigen des Rotors mit der Getriebeeingangswelle;
- Aufsetzen eines einen Lagerdorn aufweisenden Lagerschilds auf die Aufnahmeöffnung des Statorgehäuses, wobei der Lagerdorn in einen den Rotorhohlraum der Rotorhohlwelle und in eine in dem Rotorhohlraum angeordnete drehgelenkig angebundene Lagereinrichtung eingreift, so dass der Rotor um dessen Rotorlängsachse drehbar gelagert ist.

Mit anderen Worten ist es ein Aspekt der vorliegenden Erfindung, ein Verfahren zur Anordnung einer elektrischen Maschine auf ein Getriebe bereitzustellen, wobei zunächst ein Statorgehäuse bereitgestellt wird, dass eine zylinderförmig ausgebildete innere Mantelfläche aufweist. Zudem umfasst das Statorgehäuse eine Aufnahmeöffnung, wobei die Aufnahmeöffnung vorzugsweise bezogen auf eine Längsachse des Statorgehäuses in axialer Richtung ausgebildet ist.

In dem Statorgehäuse wird ein hohlzylinderförmig ausgebildeter Stator angeordnet. Dieser kann vorzugsweise über die Aufnahmeöffnung in das Statorgehäuse eingeführt und mit diesem drehfest verbunden werden. Vorzugsweise wird der Stator in das Statorgehäuse eingepresst, so dass eine drehfeste Verbindung mit dem Statorgehäuse entsteht. Drehfest bedeutet, dass während eines Betriebs der elektrischen Maschine der Stator in Umfangsrichtung keine Verlagerung bzw. Verdrehung relativ zum Statorgehäuse erfährt.

Nachdem der Stator in dem Statorgehäuse angeordnet worden ist, wird ein Zentrierdorn über die Aufnahmeöffnung des Statorgehäuses in einen Statorhohlraum des hohlzylinderförmig ausgebildeten Stators eingeführt und dort verspannt. Das Verspannen erfolgt vorzugsweise in einer Art und Weise, dass ein Durchmesser des Zentrierdorns zumindest abschnittsweise vergrößert wird.

Anschließend wird das Statorgehäuse auf das Getriebe aufgesetzt, wobei die Längsachse einer im Getriebe gelagerten Getriebeeingangswelle koaxial zur Längsrichtung des in dem Stator angeordneten Zentrierdorns ausgerichtet wird. Das präzise Ausrichten ist ein erster Schritt, um den Luftspalt zwischen Rotor und Stator zu reduzieren. Nach dem präzisen Ausrichten wird das Statorgehäuse auf dem Getriebe befestigt bzw. fixiert. Dies erfolgt vorzugsweise kraftschlüssig über entsprechende Verbindungsbolzen bzw. Schrauben.

Nachdem das Statorgehäuse auf dem Getriebe fixiert worden ist, wird der Zentrierdorn aus dem Statorhohlraum entnommen. Hierzu wird die Verspannung des Zentrierdorns gelöst. Damit geht vorzugsweise eine Reduzierung des Durchmessers des Zentrierdorns einher, so dass dieser in einfacher Weise aus dem Statorhohlraum entnommen werden kann.

In einem weiteren Schritt wird ein eine Rotorhohlwelle aufweisender Rotor in den Statorhohlraum eingesetzt und mit der Getriebeeingangswelle verbunden. Bedingt dadurch, dass der Rotor als Hohlwelle ausgebildet ist, kann dieser ein reduziertes Gewicht aufweisen. Die Befestigung des Rotors mit der Getriebeeingangswelle erfolgt vorzugsweise über eine Schraubverbindung.

Nachdem der Rotor mit der Getriebeeingangswelle befestigt worden ist, wird ein Lagerschild auf die Aufnahmeöffnung des Stators gesetzt, um diese zu verschließen. Der Lagerschild weist einen Lagerdorn auf, der in einen Rotorhohlraum der Rotorwelle ragt, und in eine in dem Rotorhohlraum angeordnete drehgelenkig angebundene Lagereinrichtung eingreift, so dass der Rotor um dessen Rotorlängsachse drehbar gelagert ist. Fertigungsbedingte Toleranzen bzw. leichte Abweichungen aus der Längsrichtung zwischen Lagerdorn und Getriebeeingangswelle können über die drehgelenkig angebundene Lagereinrichtung ausgeglichen werden, so dass der Luftspalt zwischen Rotor und Stator reduziert werden kann. Zudem können durch diesen Ausgleich unerwünschte Geräusche im Betrieb der elektrischen Maschine reduziert werden und die Langlebigkeit der elektrischen Maschine kann erhöht werden.

Die Rotorhohlwelle ist vorzugsweise an ein hohlzylinderförmig ausgebildetes Blechpakets des Rotors angegossen und/oder angeformt. Eine an das Blechpaket angegossene Rotorhohlwelle ist vorzugsweise aus einem Aluminiumverguss ausgebildet. Eine an das Blechpaket angeformte Rotorhohlwelle weist vorzugsweise eine Aluminiumlegierung auf. Die angeformte Rotorhohlwelle ist vorzugsweise eine geschmiedete Rotorhohlwelle, die über eine Schmiedewerkzeug an den Rotor angeformt wird und somit drehfest mit dem Blechpaket verbunden wird. Eine geschmiedete Rotorhohlwelle kann gegenüber einer angegossenen Rotorhohlwelle eine erhöhte Steifigkeit bzw. eine reduzierte Elastizität aufweisen, wodurch der Luftspalt zwischen Rotor und Stator reduziert werden kann.

Grundsätzlich ist der Stator derart in dem Statorgehäuse angeordnet, dass dieser drehfest ausgebildet ist. Dies bedeutet, dass der Stator relativ zum Statorgehäuse während eines Betriebs der elektrischen Maschine keine Verdrehung in Umfangsrichtung des Stators erfährt. In einer vorteilhaften Weiterbildung der Erfindung ist vorgesehen, dass der Stator in das Statorgehäuse eingepresst wird, und/oder stoffschlüssig mit dem Statorgehäuse verbunden wird. Auf diese Weise kann eine sichere drehfeste Verbindung zwischen Stator und Statorgehäuse gewährleistet werden.

In einer vorteilhaften Weiterbildung der Erfindung ist vorgesehen, dass vor dem Ausrichten des Statorgehäuses auf dem Getriebe, das Statorgehäuse mit einer der Aufnahmeöffnung abgewandten Endseite auf einen Flansch derart aufgesteckt und mit diesem drehfest verbunden wird, dass eine Längsachse des Stators senkrecht zu einer Flanschfläche des Flanschs ausgerichtet ist, die - bei einer Montage des Statorgehäuses auf dem Getriebe - dem Getriebe zugewandt ist. Vorzugsweise ist die Flanschfläche des Flanschs bei einer Montage des Statorgehäuses auf dem Getriebe senkrecht zur Längsachse der Getriebeeingangswelle ausgerichtet. Durch die getrennte Ausbildung von Flansch und Statorgehäuse kann in einfacher Weise ein hohlzylinderförmig ausgebildetes Statorgehäuse hergestellt werden. Im Nachgang wird dann der Flansch, der vorzugsweise Befestigungseinrichtungen zur Befestigung mit dem Getriebe aufweist, auf das Statorgehäuse angeordnet und mit diesem kraftschlüssig, formschlüssig und/oder stoffschlüssig verbunden werden. Somit können die Herstellungskosten des Statorgehäuses reduziert werden.

In diesem Zusammenhang liegt eine vorteilhafte Weiterbildung der Erfindung darin, dass der Flansch und das Statorgehäuse stoffschlüssig miteinander verbunden werden. Eine stoffschlüssige Verbindung kann vorzugsweise eine Klebeverbindung und/oder eine Schweißverbindung sein. Bei der stoffschlüssigen Verbindung des Flansches mit dem Statorgehäuse ist darauf zu achten, dass die Wärmeeinwirkung auf den Flansch und insbesondere auf das Statorgehäuse so gering wie möglich gehalten wird, um Materialschwächungen und/oder Materialverformungen des Statorgehäuses und/oder des Flansches zu vermeiden.

Gemäß einer bevorzugten Weiterbildung der Erfindung ist vorgesehen, dass zum Ausrichten des Statorgehäuses auf dem Getriebe, ein an dem axialen Ende des Zentrierdorns ausgebildeter Vorsprung in eine Ausnehmung der Getriebewelle eingreift und/oder eingeführt wird, so dass die Längsachse des Zentrierdorns koaxial zur Längsachse der Getriebeeingangswelle ausgerichtet ist. Durch den Formschluss des Zentrierdorns mit einer Ausnehmung in der Getriebeeingangswelle, kann eine erhöhte Genauigkeit bei der Zentrierung des Statorgehäuses auf dem Getriebe erzielt werden. Dies führt dazu, dass der Luftspalt zwischen dem Stator und dem in Anschluss an die Entnahme des Zentrierdorns in den Rotorhohlraum eingeführten Rotor reduziert werden kann. Auf diese Weise kann die Leistungsdichte der elektrischen Maschine erhöht werden.

Grundsätzlich kann der Zentrierdorn derart in den Statorhohlraum eingebracht und verspannt werden, dass dieser lagesicher und in dem Statorhohlraum zentriert angeordnet bzw. ausgebildet ist. Eine vorteilhafte Weiterbildung der Erfindung liegt darin, dass der Zentrierdorn in radialer Richtung gegen eine innere Mantelfläche des Statorhohlraums verspannt wird. Das Verspannen des Zentrierdorns kann vorzugsweise dadurch erfolgen, dass der Durchmesser des Zentrierdorns vergrößert wird, und sich die äußere Mantelfläche des Zentrierdorns zumindest abschnittsweise gegen die innere Mantelfläche des Statorhohlraums verspannt. Auf diese Weise kann sichergestellt werden, dass die Längsachse des Zentrierdorns im Wesentlichen gleich der Längsachse des zylinderförmig ausgebildeten Statorgehäuses ist.

In einer vorteilhaften Weiterbildung der Erfindung ist vorgesehen, dass die drehgelenkig angebundene Lagereinrichtung über eine Hohlwellenöffnung, die auf einer der Getriebeeingangswelle abgewandten Seite ausgebildet ist, in den Rotor eingesteckt und über einen Sicherungsring fixiert wird. Hierzu ist in der Hohlwellenöffnung ein Lagersitz ausgebildet, damit die Lagereinrichtung in den Lagersitz angeordnet werden kann. Die Lagereinrichtung wird über einen Sicherungsring in axialer Richtung fixiert.

Gemäß einer bevorzugten Weiterbildung der Erfindung ist vorgesehen, dass die Lagereinrichtung einen Aufnahmering und ein in den Aufnahmering drehgelenkig anordbares Lager aufweist, wobei das Lager über eine translatorische Bewegung und eine Schwenkbewegung in den Aufnahmering angeordnet wird. Auf diese Weise kann in einfacher Weise ein drehgelenkig ausgebildetes Lager bereitgestellt werden, dass kostengünstig herstellbar ist.

Abschließend liegt eine bevorzugte Weiterbildung der Erfindung darin, dass der Lagerschild stoffschlüssig und/oder formschlüssig mit dem Gehäuse verbunden wird.

Die Erfindung betrifft zudem eine Antriebseinrichtung für ein zumindest teilweise elektrisch angetriebenes Kraftfahrzeug, umfassend ein Getriebe mit einer auf dem Getriebe angeordneten elektrischen Maschine, wobei die elektrische Maschine nach dem erfindungsgemäßen Verfahren auf dem Getriebe ausgerichtet und angeordnet ist.

Weitere Merkmale der Erfindung ergeben sich aus den Unteransprüchen sowie den nachfolgenden Ausführungsbeispielen. Die Ausführungsbeispiele sind nicht als einschränkend, sondern vielmehr als beispielhaft zu verstehen. Sie sollen den Fachmann in die Lage versetzen, die Erfindung auszuführen. Die Anmelderin behält sich vor, einzelne oder mehrere der in den Ausführungsbeispielen offenbarten Merkmale zum Gegenstand von Patentansprüchen zu machen oder solche Merkmale in bestehende Patentansprüche aufzunehmen. Die Ausführungsbeispiele werden anhand von Figuren näher erläutert.

In diesen zeigen:
- Fig. 1: eine Anordnung eines Stators in einem Statorgehäuse;
- Fig. 2: einen Schnitt durch das Statorgehäuse, in dem der Stator angeordnet ist;
- Fig. 3: eine Ansicht des Statorgehäuses zur Anordnung auf einen Flansch;
- Fig. 4 bis 6: eine Ansicht des Statorgehäuses mit Flansch zur Anordnung auf einem Getriebe;
- Fig. 7 und 8: eine Ansicht, wie der Stator auf dem Getriebe befestigt wird;
- Fig. 9: eine Ansicht, wie eine Lagereinrichtung in den Rotor eingesetzt wird;
- Fig. 10 bis 12: eine Ansicht, wie ein Lager in einem Aufnahmering der Lagereinrichtung eingeführt wird;
- Fig. 13: eine Ansicht, wie der Rotor in den Stator eingesetzt wird und der Lagerschild das Statorgehäuse verschließt;
- Fig. 14: einen Schnitt durch die elektrische Maschine.

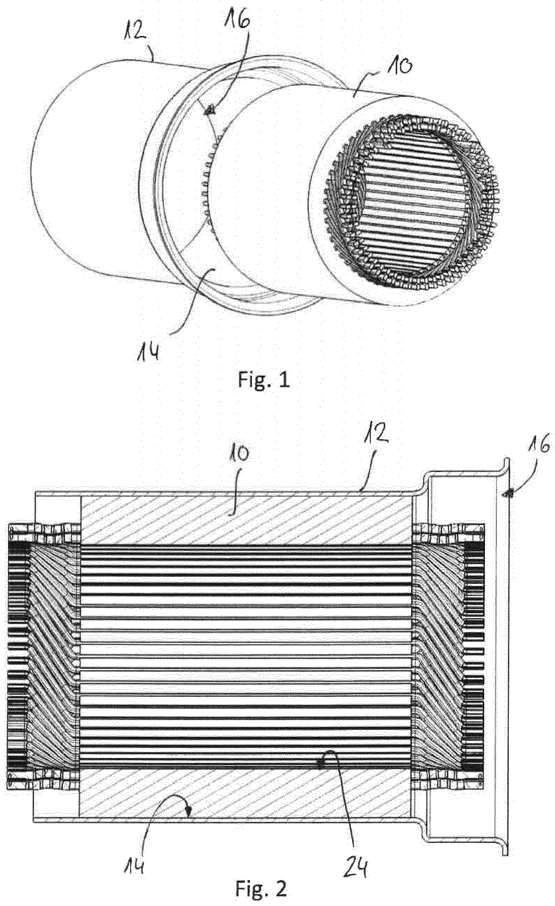

Der Fig. 1 ist zu entnehmen, wie ein hohlzylinderförmig ausgebildeter Stator 10 in ein Statorgehäuse 12 eingesetzt wird. Das Statorgehäuse 12 weist auf einer in radialer Richtung nach innen gerichteten Seite eine innere Mantelfläche 14 auf. Zudem weist das Statorgehäuse 12 eine Aufnahmeöffnung 16 auf, die in axialer Richtung des zylinderförmig ausgebildeten Statorgehäuses 12 ausgebildet ist. Der hohlzylinderförmig ausgebildete Stator 10, wird in Längsrichtung des Statorgehäuses 12 in die Aufnahmeöffnung 16 in das Statorgehäuse 12 eingepresst, so dass der Stator 10 drehfest in dem Statorgehäuse 12 angeordnet ist. Drehfest bedeutet, dass eine Verdrehung des Stators 10 in Umfangsrichtung relativ zum Statorgehäuse 12 unterbunden ist.

Die Fig. 2 zeigt einen Schnitt durch das Statorgehäuse 12, in dem der aus Fig. 1 beschriebene Stator 10 eingepresst ist.

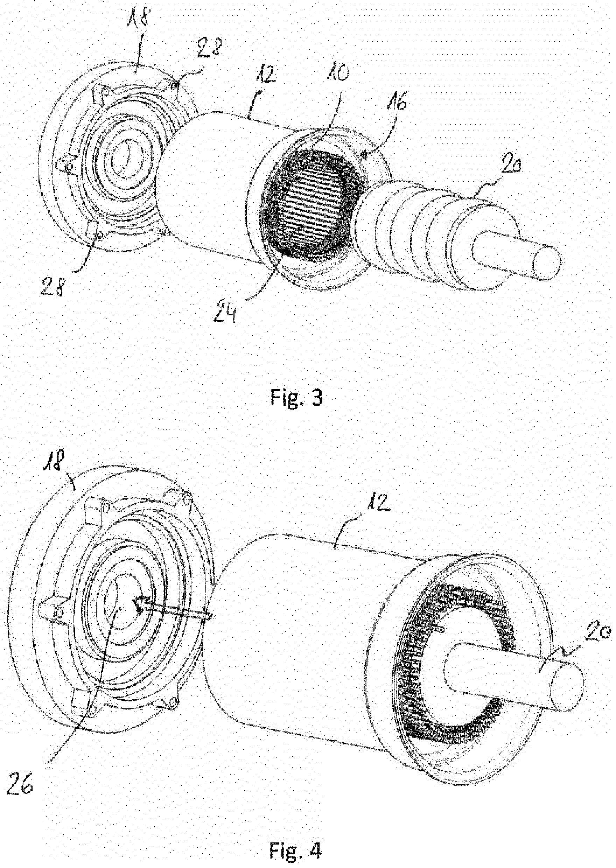

Die Fig. 3 bis 6 zeigen eine Anordnung des Statorgehäuses 12 auf einen Flansch 18. Hierzu wird in einem ersten Schritt ein Zentrierdorn 20 wird über die Aufnahmeöffnung 16 des Statorgehäuses 12 in einen Statorhohlraum 22 des hohlzylinderförmig ausgebildeten Stators 10 eingeführt und gegen eine in radialer Richtung nach innen gerichteten inneren Mantelfläche 24 des Stators 10 verspannt. In einem zweiten Schritt wird das Statorgehäuse 12 auf den Flansch 18 aufgesteckt.

Der Fig. 4 ist zu entnehmen, dass, bevor das Statorgehäuse 12 auf den Flansch 18 aufgesteckt wird, zuerst der Zentrierdorn 20 in den Statorhohlraum 22 eingeführt und verspannt wird. Der Zentrierdorn 20 weist auf einer dem Flansch 18 zugewandten Seite einen Vorsprung 40 auf, der durch den Flansch 18 ragt bzw. durch eine Öffnung 26 innerhalb des Flanschs 18 einführbar ist, um den Flansch 18 auf dem Statorgehäuse 12 zu zentrieren.

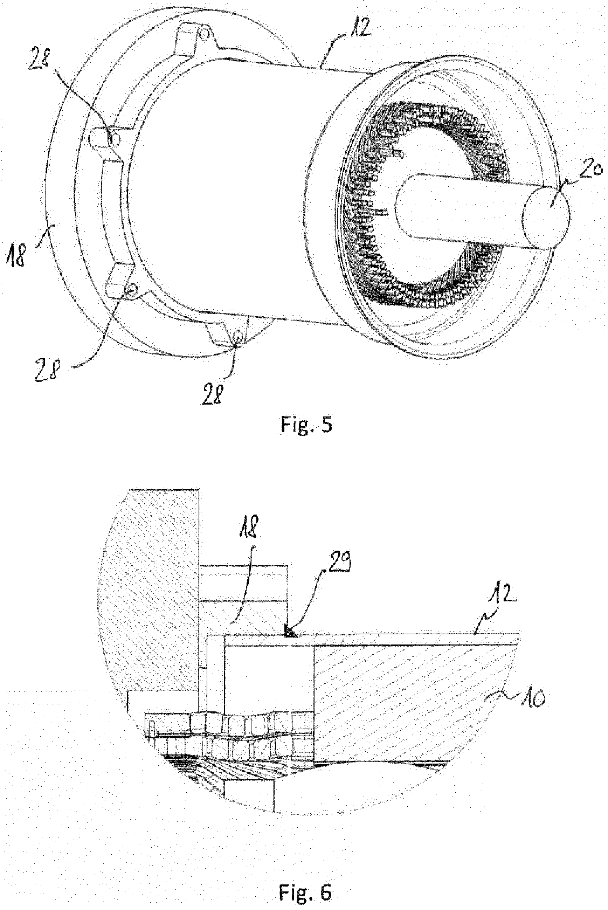

Fig. 5 zeigt eine Ansicht, wie das Statorgehäuse 12 auf den Flansch 18 aufgesteckt ist. Der Flansch 18 weist eine Mehrzahl von Befestigungsöffnungen 28 auf, über die ein Befestigungsmittel 38 hindurchgeführt und mit einem Getriebe 30 verbunden werden kann.

Fig. 6 zeigt einen Detailschnitt des Statorgehäuses 12 im Bereich des Flansches 18. Der Flansch 18 ist auf das Statorgehäuse 12 aufgesteckt und stoffschlüssig mit dem Statorgehäuse 12 verbunden. Im vorliegenden Ausführungsbeispiel ist die stoffschlüssige Verbindung 29 eine Schweißverbindung.

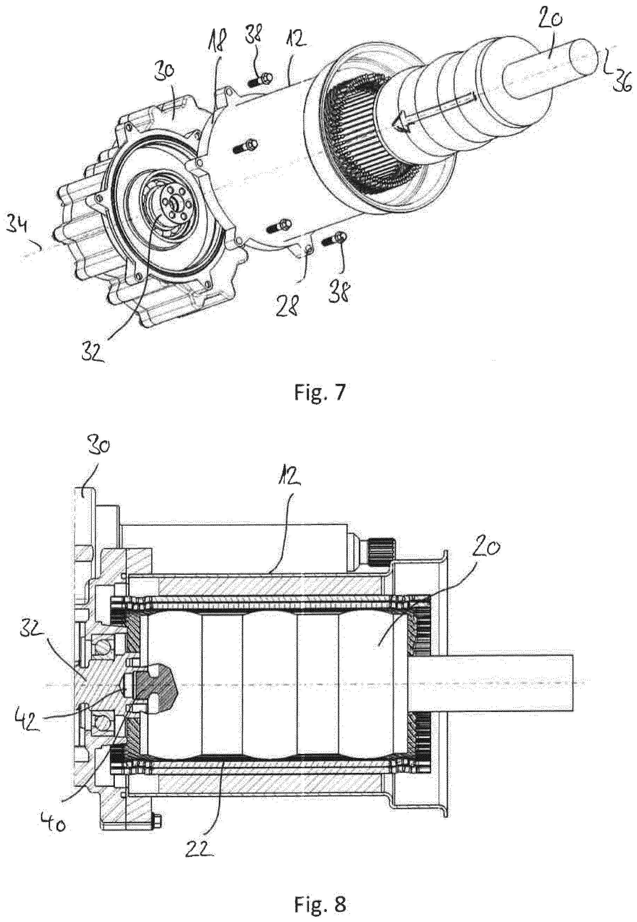

Die Fig. 7 bis 8 zeigen eine Befestigung und Ausrichtung des Statorgehäuses 12 auf einem Getriebe 30. Das Getriebe 30 weist eine Getriebeeingangswelle 32 auf. Das Statorgehäuse 12 wird über den Zentrierdorn 20 derart auf dem Getriebe 30 angeordnet, dass eine Längsachse 34 der Getriebeeingangswelle 32 koaxial zur Längsrichtung 36 des in dem Stator 10 angeordneten Zentrierdorns 20 ausgerichtet ist. Das präzise Ausrichten des Statorgehäuses 12 relativ zum Getriebe 30 ist ein erster Schritt, um den Luftspalt zwischen einem in dem Statorhohlraum einsetzbaren Rotor 44 und den Stator 10 zu reduzieren. Der Luftspalt ist demnach in radialer Richtung zwischen Rotor 44 und Stator 10 ausgebildet. Nach einem präzisen Ausrichten wird das Statorgehäuse 12 auf dem Getriebe 30 befestigt bzw. fixiert. Dies erfolgt im vorliegenden Ausführungsbeispiel kraftschlüssig über Befestigungsmittel 38 in Form von Schrauben, die durch die Befestigungsöffnungen 28 des Flansches 18 geführt und mit dem Getriebe 30 verschraubt werden.

Fig. 8 zeigt einen Schnitt durch das auf das Getriebe 30 aufgesetzte Statorgehäuse 12. Demnach ist zu entnehmen, dass ein Vorsprung 40 des Zentrierdorns 20 in eine Aufnahme 42 der Getriebeeingangswelle 32 eingreift, bzw. eingeführt wird, um die Längsrichtung 36 des Zentrierdorns 20 koaxial zur Längsachse 34 der Getriebeeingangswelle 32 auszurichten.

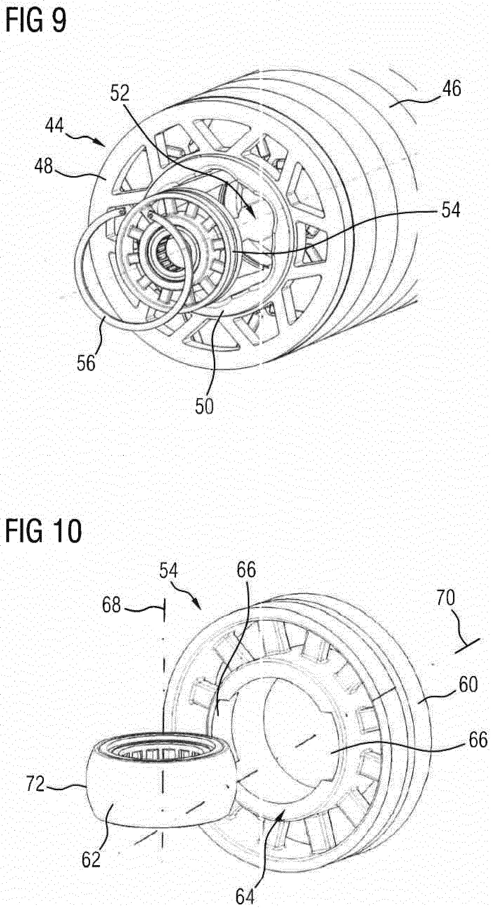

Fig. 9 zeigt eine Ansicht eines Rotors 44 zur Anordnung in den Statorhohlraum 22. Der Rotor 44 weist ein hohlzylinderförmig ausgebildetes Blechpaket 46 auf, dass mehrere in axialer Richtung hintereinander angeordnete Blechpaketsegmente umfasst. In axialer Richtung ist endseitig auf dem Blechpaket 46 jeweils eine Deckscheibe 48 angeordnet. An eine innere Mantelfläche des hohlzylinderförmig ausgebildeten Blechpakets 46 ist eine Rotorhohlwelle 50 angeformt und/oder angegossen. Gegenüber herkömmlichen Wellen bzw. Rotoren weist ein Rotor mit einer Rotorhohlwelle 50 ein reduziertes Gewicht auf. Die Rotorhohlwelle 50 weist an einem axialen Ende eine Hohlwellenöffnung 52 auf, über die eine Lagereinrichtung 54 in die Hohlwelle eingesteckt und in dieser über einen Sicherungsring 56 in der Rotorhohlwelle 50 ausgebildeten Lagersitz 58 fixiert wird. Die Lagereinrichtung 54 ist drehgelenkig ausgebildet.

Die Fig. 10 bis 12 zeigen die Ausbildung der Lagereinrichtung 54, die aus einem Aufnahmering 60 und aus einem in dem Aufnahmering 60 angeordneten Lager 62 ausgebildet wird.

Der Fig. 10 ist zu entnehmen, dass der Aufnahmering 60 auf einer in axialer Richtung des Aufnahmerings 60 ausgerichteten Stirnseite 64 zwei zueinander beabstandet angeordnete Aufnahmenuten 66 zur Aufnahme des Lagers 62 aufweist. Das Lager 62 wird über eine translatorische Bewegung in den Aufnahmering 60 eingeführt. Dabei ist eine Längsachse 68 des Lagers 62 senkrecht zu einer Längsachse 70 des Aufnahmerings 60 angeordnet.

Weiterhin ist ersichtlich, dass das Lager 62 auf einer in radialer Richtung nach außen gerichteten Mantelfläche 72 eine konvexe Ausgestaltung aufweist. Der Aufnahmering weist auf einer in radialer Richtung nach innen gerichteten Innenseite 74 eine konkave Ausgestaltung auf.

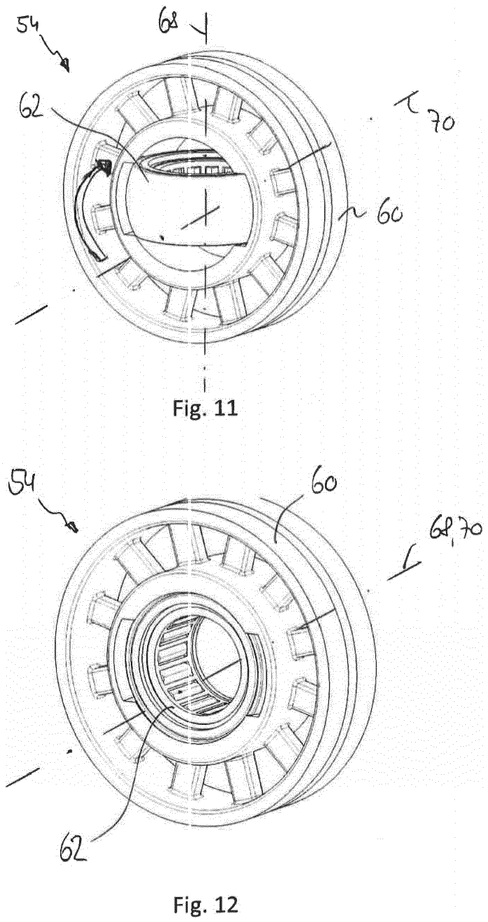

Fig. 11 zeigt, dass das Lager 62 über die translatorische Bewegung über die Aufnahmenuten 66 in den Aufnahmering 60 eingeführt worden ist. Das Lager 62 wird nun über eine Schwenkbewegung derart verschwenkt, dass die Längsachse 68 des Lagers 62 gleich der Längsachse 70 des Aufnahmerings 60 entspricht.

Fig. 12 zeigt, dass in dem Aufnahmering 60 verschwenkte Lager 62, wobei die Längsachse 68 des Lagers 62 gleich der Längsachse 70 des Aufnahmerings 60 ist. Auf diese Weise wird ein sphärisches Lager 62 bereitgestellt, dass axiale Toleranzen zwischen der Längsachse 34 der Getriebeeingangswelle 32 und einer Rotorlängsachse des Rotors 44 ausgleichen kann.

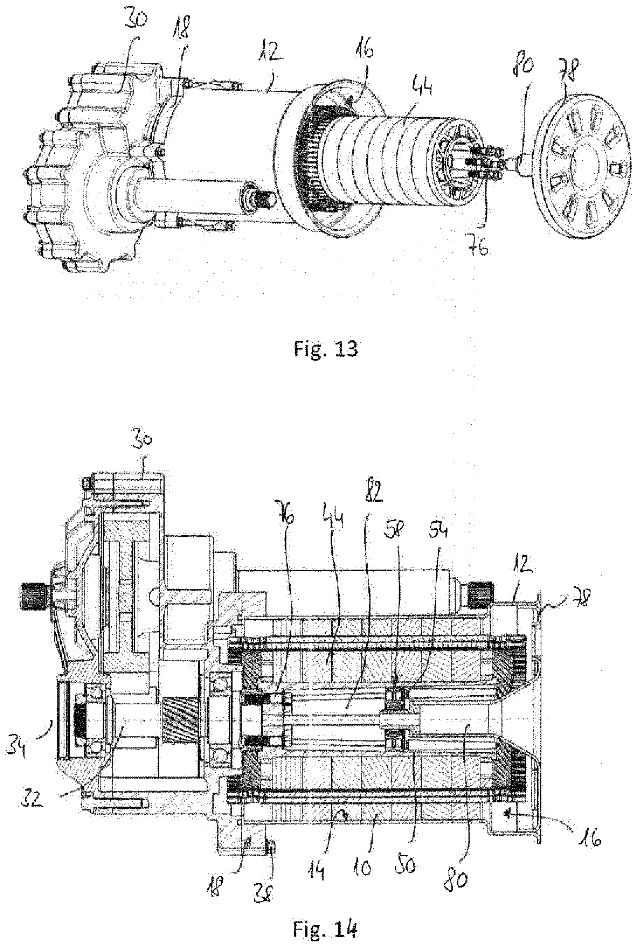

Die Fig. 13 zeigt eine Ansicht des auf dem Getriebe 30 befestigten Statorgehäuses 12, in dass der Rotor 44 über die Aufnahmeöffnung 16 in den Statorhohlraum 22 eingeführt wird und mit der Getriebeeingangswelle 32 über Schrauben 76 kraftschlüssig verbunden wird. Im Anschluss wird ein Lagerschild 78 auf das Statorgehäuse 12 aufgesetzt, um die Aufnahmeöffnung 16 zu verschließen. Der Lagerschild 78 weist auf einer dem Rotor 44 zugewandten Seite einen Lagerdorn 80 auf, der in einen Rotorhohlraum 82 der Rotorhohlwelle 50 und in die in den Rotorhohlraum 82 angeordnete drehgelenkig angebundene Lagereinrichtung 54 eingreift, so dass Rotor 44 um dessen Rotorlängsachse drehbar gelagert ist.

Fig. 14 zeigt einen Schnitt durch das Getriebe 30 und die elektrische Maschine, die das Statorgehäuse 12 umfasst. Durch das präzise Ausrichten des Statorgehäuses 12 in Bezug auf die Längsachse 34 der Getriebeeingangswelle 32 und der Anordnung einer sphärischen Lagereinrichtung 54 in der Rotorhohlwelle 50 des Rotors 44 können Toleranzen ausgeglichen werden, so dass der Luftspalt in radialer Richtung zwischen dem Rotor 44 und dem Stator 10 reduziert werden kann, so dass die Leistungsdichte der elektrischen Maschine erhöht werden kann.

## Patentansprüche

1. Verfahren zur Anordnung einer elektrischen Maschine auf einem Getriebe, umfassend die Schritte:
- Bereitstellen eines Statorgehäuses (12), das zumindest eine zylinderförmig ausgebildete innere Mantelfläche (14) und eine Aufnahmeöffnung (16) aufweist;
- Einsetzen eines hohlzylinderförmig ausgebildeten Stators (10) in das Statorgehäuse (12), so dass der Stator (10) drehfest in dem Statorgehäuse (12) angeordnet ist;
- Einführen eines Zentrierdorns (20) über die Aufnahmeöffnung (16) des Statorgehäuses (12) in einen Statorhohlraum (22) des hohlzylinderförmig ausgebildeten Stators (10) und Verspannen des Zentrierdorns (20) in dem Statorhohlraum (22);
- Ausrichten des Statorgehäuses (12) auf dem Getriebe (30), so dass eine Längsachse (34) einer in dem Getriebe (30) gelagerten Getriebeeingangswelle (32) koaxial zur Längsrichtung (36) des in dem Stator (10) angeordneten Zentrierdorns (20) ausgerichtet ist;
- Befestigen des Statorgehäuses (12) auf dem Getriebe (30);
- Entnahme des Zentrierdorns (20) aus dem Statorhohlraum (22);
- Einsetzen eines eine Rotorhohlwelle (50) aufweisenden Rotors (44) in den Stator (10);
- Befestigen des Rotors (44) mit der Getriebeeingangswelle (32);
- Aufsetzten eines einen Lagerdorn (80) aufweisenden Lagerschilds (78) auf die Aufnahmeöffnung (16) des Statorgehäuses (12), wobei der Lagerdorn (80) in einen Rotorhohlraum (82) der Rotorhohlwelle (50) und in eine in dem Rotorhohlraum (50) angeordnete drehgelenkig angebundene Lagereinrichtung (54) eingreift, so dass der Rotor (44) um dessen Rotorlängsachse drehbar gelagert ist.

2. Verfahren nach Anspruch 1, **dadurch gekennzeichnet, dass** der Stator (10) in das Statorgehäuse (12) eingepresst wird und/oder stoffschlüssig in das Statorgehäuse (12) eingesetzt und mit diesem verbunden wird.

3. Verfahren nach einem der vorstehenden Ansprüche, **dadurch gekennzeichnet, dass** vor dem Ausrichten des Statorgehäuses (12) auf dem Getriebe (30), das Statorgehäuse (12) mit einer der Aufnahmeöffnung (16) abgewandten Endseite auf einen Flansch (18) derart aufgesteckt und mit diesem drehfest verbunden wird, dass eine Längsachse des Stators (10) senkrecht zu einer Flanschfläche des Flanschs (18) ausgerichtet ist, die bei einer Montage des Statorgehäuses (12) auf das Getriebe (30) dem Getriebe (30) zugewandt ist.

4. Verfahren nach Anspruch 3, **dadurch gekennzeichnet, dass** der Flansch (18) und das Statorgehäuse (12) stoffschlüssig miteinander verbunden werden.

5. Verfahren nach einem der vorstehenden Ansprüche, **dadurch gekennzeichnet, dass** zum Ausrichten des Statorgehäuses (12) auf dem Getriebe (30), ein an einem axialen Ende des Zentrierdorns (20) ausgebildeter Vorsprung (40) in eine Ausnehmung und/oder Aufnahme (42) der Getriebeeingangswelle (32) eingreift, so dass die Längsachse des Zentrierdorns (20) koaxial zur Längsachse (34) der Getriebeeingangswelle (32) ausgerichtet wird.

6. Verfahren nach einem der vorstehenden Ansprüche, **dadurch gekennzeichnet, dass** der Zentrierdorn (20) in radialer Richtung gegen eine innere Mantelfläche (24) des Statorhohlraums (22) verspannt wird.

7. Verfahren nach einem der vorstehenden Ansprüche, **dadurch gekennzeichnet, dass** die drehgelenkig angebundene Lagereinrichtung (54) über eine Hohlwellenöffnung (52), die auf einer der Getriebeeingangswellen (32) abgewandten Seite ausgebildet ist, in den Rotor (44) eingesteckt und über einen Sicherungsring (56) lagesicher fixiert wird.

8. Verfahren nach einem der vorstehenden Ansprüche, **dadurch gekennzeichnet, dass** die Lagereinrichtung (54) einen Aufnahmering (60) und ein in den Aufnahmering (60) drehgelenkig anordbares Lager (62) aufweist, wobei das Lager (62) über eine translatorische Bewegung und eine Schwenkbewegung in den Aufnahmering (60) angeordnet wird.

9. Verfahren nach einem der vorstehenden Ansprüche, **dadurch gekennzeichnet, dass** der Lagerschild (78) stoffschlüssig und/oder formschlüssig mit dem Statorgehäuse (12) verbunden wird.

10. Antriebseinrichtung für ein Kraftfahrzeug, umfassend ein Getriebe (30) mit einer auf dem Getriebe (30) angeordneten elektrischen Maschine, wobei die elektrische Maschine nach einem Verfahren gemäß den vorstehenden Ansprüchen auf dem Getriebe (30) ausgerichtet und angeordnet ist, und wobei
der Lagerschild (78) den Lagerdorn (80) aufweist, der in den Rotorhohlraum (82) der Rotorwelle (50) ragt, und in die in dem Rotorhohlraum (82) angeordnete drehgelenkig angebundene Lagereinrichtung (54) eingreift, so dass der Rotor (44) um dessen Rotorlängsachse drehbar gelagert ist.

## Claims

1. Method for arranging an electric machine on a transmission,
comprising the steps:
- providing a stator housing (12) which has at least one cylindrical inner casing surface (14) and a receiving opening (16);
- inserting a hollow cylindrical stator (10) into the stator housing (12) such that the stator (10) is rotationally fixed in the stator housing (12);
- inserting a centring pin (20) into a stator cavity (22) of the hollow cylindrical stator (10) via the receiving opening (16) of the stator housing (12), and clamping the centring pin (20) in the stator cavity (22);
- aligning the stator housing (12) on the transmission (30) such that a longitudinal axis (34) of a transmission input shaft (32) mounted in the transmission (30) is oriented coaxially to the longitudinal direction (36) of the centring pin (20) arranged in the stator (10);
- securing the stator housing (12) on the transmission (30);
- removing the centring pin (20) from the stator cavity (22);
- inserting a rotor (44) having a rotor hollow shaft (50) into the stator (10);
- securing the rotor (44) to the transmission input shaft (32); and
- placing a bearing shield (78) having a bearing pin (80) on the receiving opening (16) of the stator housing (12), wherein the bearing pin (80) engages in a rotor cavity (82) of the rotor hollow shaft (50) and in a pivotally attached bearing device (54) arranged in the rotor cavity (50) such that the rotor (44) is mounted so as to be rotatable about its rotor longitudinal axis.

2. Method according to Claim 1, **characterized in that** the stator (10) is pressed into the stator housing (12) and/or inserted in the stator housing (12) and connected thereto by substance bonding.

3. Method according to one of the preceding claims, **characterized in that** before the alignment of the stator housing (12) on the transmission (30), an end side of the stator housing (12) facing away from the receiving opening (16) is pushed onto a flange (18) and connected rotationally fixedly thereto such that a longitudinal axis of the stator (10) is oriented perpendicularly to a flange face of the flange (18) which faces the transmission (30) when the stator housing (12) is mounted on the transmission (30).

4. Method according to Claim 3, **characterized in that** the flange (18) and the stator housing (12) are connected together by substance bonding.

5. Method according to one of the preceding claims, **characterized in that** to align the stator housing (12) on the transmission (30), a protrusion (40) formed on an axial end of the centring pin (20) engages in a recess and/or receiver (42) of the transmission input shaft (32), such that the longitudinal axis of the centring pin (20) is oriented coaxially to the longitudinal axis (34) of the transmission input shaft (32).

6. Method according to one of the preceding claims, **characterized in that** the centring pin (20) is clamped in the radial direction against an inner casing surface (24) of the stator cavity (22).

7. Method according to one of the preceding claims, **characterized in that** the pivotally attached bearing device (54) is inserted in the rotor (44) via a hollow shaft opening (52) which is formed on a side facing away from the transmission input shaft (32), and fixed securely in position via a securing ring (56).

8. Method according to one of the preceding claims, **characterized in that** the bearing device (54) comprises a receiving ring (60) and a bearing (62) which can be pivotally arranged in the receiving ring (60), wherein the bearing (62) is arranged in the receiving ring (60) via a translational movement and a pivot movement.

9. Method according to one of the preceding claims, **characterized in that** the bearing shield (78) is connected to the stator housing (12) by substance bonding and/or form fit.

10. Drive device for a motor vehicle, comprising a transmission (30) with an electric machine arranged on the transmission (30), wherein the electric machine is aligned and arranged on the transmission (30) by a method according to the preceding claims, and wherein
the bearing shield (78) has the bearing pin (80) which protrudes into the rotor cavity (82) of the rotor shaft (50), and engages in the pivotally attached bearing device (54) arranged in the rotor cavity (82) in such a way that the rotor (44) is mounted so as to be rotatable about its rotor longitudinal axis.

## Revendications

1. Procédé destiné à agencer une machine électrique sur une transmission,
comprenant les étapes :
- fourniture d'un boîtier (12) de stator, qui comporte au moins une surface d'enveloppe intérieure (14) de forme cylindrique et une ouverture de réception (16) ;
- insertion d'un stator (10) de forme cylindrique creuse dans le boîtier (12) de stator de telle sorte que le stator (10) est agencé de manière solidaire en rotation dans le boîtier (12) de stator ;
- introduction d'un mandrin de centrage (20) par l'ouverture de réception (16) du boîtier (12) de stator dans un espace creux (22) de stator du stator (10) de forme cylindrique creuse et serrage du mandrin de centrage (20) dans l'espace creux (22) de stator ;
- orientation du boîtier (12) de stator sur la transmission (30) de telle sorte qu'un axe longitudinal (34) d'un arbre d'entrée (32) de transmission monté dans la transmission (30) est orienté coaxialement par rapport à la direction longitudinale (36) du mandrin de centrage (20) agencé dans le stator (10) ;
- fixation du boîtier (12) de stator sur la transmission (30) ;
- retrait du mandrin de centrage (20) de l'espace creux (22) de stator ;
- insertion d'un rotor (44) comportant un arbre creux (50) de rotor dans le stator (10) ;
- fixation du rotor (44) à l'arbre d'entrée (32) de transmission ;
- placement d'un flasque (78) comportant un mandrin de palier (80) sur l'ouverture de réception (16) du boîtier (12) de stator, le mandrin de palier (80) venant en prise avec un espace creux (82) de rotor de l'arbre creux (50) de rotor et avec un système de palier (54) attaché de manière articulée en rotation agencé dans l'espace creux (50) de rotor de telle sorte que le rotor (44) est monté de manière à pouvoir tourner autour de son axe longitudinal de rotor.

2. Procédé selon la revendication 1, **caractérisé en ce que** le stator (10) est pressé dans le boîtier (12) de stator et/ou est inséré par liaison de matière dans le boîtier (12) de stator et est relié à celui-ci.

3. Procédé selon l'une des revendications précédentes, **caractérisé en ce qu'**avant l'orientation du boîtier (12) de stator sur la transmission (30), le boîtier (12) de stator est emboîté sur une bride (18) par un côté d'extrémité opposé à l'ouverture de réception (16) et est relié à celle-ci de manière solidaire en rotation de telle manière qu'un axe longitudinal du stator (10) est orienté perpendiculairement à une surface de bride de la bride (18), qui est tournée vers la transmission (30) lors d'un montage du boîtier (12) de stator sur la transmission (30).

4. Procédé selon la revendication 3, **caractérisé en ce que** la bride (18) et le boîtier (12) de stator sont reliés l'un à l'autre par liaison de matière.

5. Procédé selon l'une des revendications précédentes, **caractérisé en ce que** pour orienter le boîtier (12) de stator sur la transmission (30), une partie faisant saillie (40) réalisée sur une extrémité axiale du mandrin de centrage (20) vient en prise avec un évidement et/ou un logement (42) de l'arbre d'entrée (32) de transmission de telle sorte que l'axe longitudinal du mandrin de centrage (20) est orienté coaxialement par rapport à l'axe longitudinal (34) de l'arbre d'entrée (32) de transmission.

6. Procédé selon l'une des revendications précédentes, **caractérisé en ce que** le mandrin de centrage (20) est serré dans une direction radiale contre une surface d'enveloppe intérieure (24) de l'espace creux (22) de stator.

7. Procédé selon l'une des revendications précédentes, **caractérisé en ce que** le système de palier (54) attaché de manière articulée en rotation est enfiché dans le rotor (44) par une ouverture (52) d'arbre creux, qui est réalisée sur un côté opposé à un des arbres d'entrée (32) de transmission et est bloqué en position sûre par une bague de sécurité (56).

8. Procédé selon l'une des revendications précédentes, **caractérisé en ce que** le système de palier (54) comporte une bague de réception (60) et un palier (62) pouvant être agencé de manière articulée en rotation dans la bague de réception (60), le palier (62) étant agencé dans la bague de réception (60) par un mouvement par translation et un mouvement par pivotement.

9. Procédé selon l'une des revendications précédentes, **caractérisé en ce que** le flasque (78) est relié par liaison de matière et/ou par complémentarité de forme au boîtier (12) de stator.

10. Système d'entraînement pour un véhicule à moteur, comprenant une transmission (30) avec une machine électrique agencée sur la transmission (30), la machine électrique étant orientée et agencée sur la transmission (30) selon un procédé selon les revendications précédentes, et
le flasque (78) comportant le mandrin de palier (80), qui dépasse dans l'espace creux (82) de rotor de l'arbre (50) de rotor et vient en prise avec le système de palier (54) attaché de manière articulée en rotation agencé dans l'espace creux (82) de rotor de telle sorte que le rotor (44) est monté de manière à pouvoir tourner autour de son axe longitudinal de rotor.
